# EUROPÄISCHE PATENTANMELDUNG

(11) **EP 1 130 888 A1**
(43) Veröffentlichungstag der Anmeldung: **05.09.2001**
(21) Anmeldenummer: 00104317.3
(22) Anmeldetag: 02.03.2000
(51) Int. Cl.: H04M 1/725

(54) **Family-Pack und Family-Plus - Doppelpack(2 Handys + Moki)**

(71) Anmelder: Herburg, Lutz, 31636 Linsburg (DE)
(72) Erfinder: Herburg, Lutz, 31636 Linsburg (DE)

(57) **Zusammenfassung**

Ich habe die Patentidee für ein Family - Pack und Family - Plus Handy Paket. In dem mindestens enthalten sind 2 Erwachsenen Handy's + Moki (Dem modernen Kinderhandy).

Wo liegen die Vorteile. Das Moki ist ein Kinder Sicherheits Handy,wobei ich bewußt die Begriffe wie Sicherheits - o. Beschützerhandy weggelassen habe um Unangenehmen Gesellen nicht gleich auf die Idee der Sicherheit des Moki aufmerksam zu machen. Es zeichnet sich aus weil es nur eine minimal Tastatur besitzt. Die Kinder müßen sich keine langen Nummern merken sondern nur die Ziffern 1- 7 bzw. 1 - 8. Darum ist das Moki auch gut geeignet für ältere Personen, die dann vielleicht mal Ihren Sohn,Tochter oder Hausarzt anrufen möchten o. müßen.

Genauso wenn ältere o. Behinderte Personen vermißt werden, was ja vorkommen kann, kann die jeweilige Person den Notrufknopf drücken und sie ist leicht auffindbar.

Sollte ein Kind entführt werden kann es selbst in der Jackentasche einen Stummen Notruf abgeben.

Eltern und Kinder sind immer gegeneinander gut erreichbar.

Und ich denke das Family - Pack o. Family - Plus zusammen mit dem Moki ergeben eine gute u. sichere Sache für Jung und Alt.

Damit können die jüngsten wie auch die ältesten umgehen weil es eine leichte Handhabung mit einer großen Sicherheit verbindet.

## Beschreibung

Bei meinem Patentvorschlag steht einmal der Name Family - Pack u. Family - Plus für ein Handy Doppel-Paket mit erweiterbaren Handy's oder Kinderhandy's für die ganze Familie,mit 2 Handy's und Kinderhandy oder 3 Handy's oder 3 Handy's + Kinderhandy u.s.w.

Der Zweck in der Sache liegt darin,man kauft ein Handy für seine Frau oder Freundin, schön und gut man selber ist aber nicht erreichbar.

Genauso das Kinderhandy.Das gibt es doch schon könnte man sagen,klar jedoch gibt es beim Kinderhandy noch Besonderheiten worauf ich noch zu sprechen komme.

Die Zweckmäßigkeit liegt aber im mehr Pack; dem Family - Pack o. Family - Plus wo es die Handy's für die ganze Familie gibt.

Jetzt aber zu meinem eigentlichen Patentvorschlag ! Dem Moki (Das moderne Kinderhandy). Warum Moki ? Auch darauf komme ich noch zu sprechen.

In meiner Zeichnung Blatt 1, sehen Sie das Moki. Der wesentliche Vorteil des Moki's ist die Sicherheit, weil nicht einfach ein Handy sondern Sicherheitshandy und zusammen mit dem Family - Pack o. Family - Plus eine richtig Gute und Sichere Sache. Warum ?

Komme ich in der Zusammenfassung drauf zurück! Doch nun zu den eigentlichen Besonderheiten des Moki.

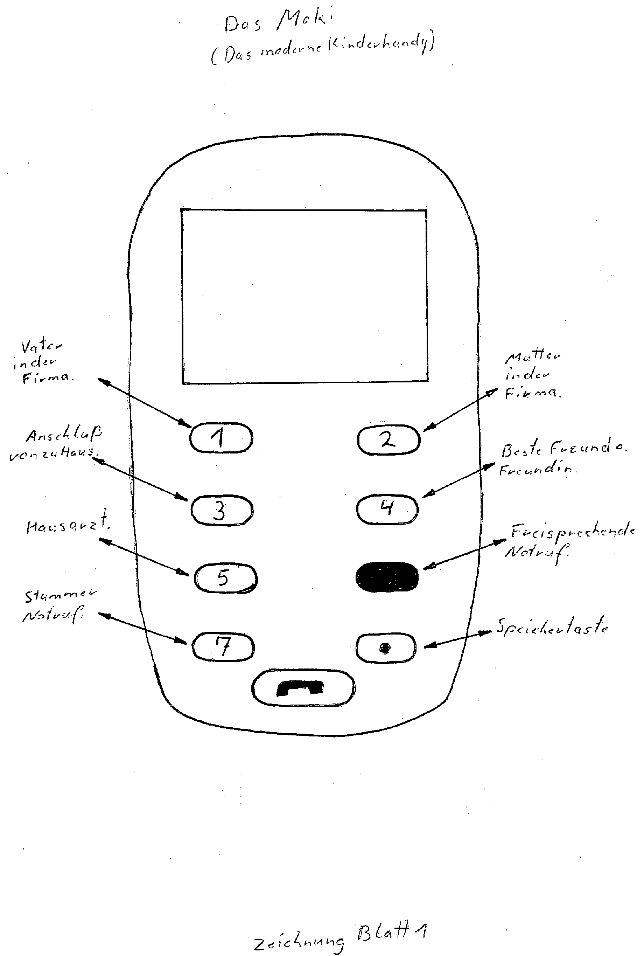

Das Moki ist nicht wie Normal mit einer Wahltastatur ausgestattet sondern nur mit Speichertasten wie in der Zeichnung Blatt 1 zu sehen ist.

Es steht z.B. die Taste 1 für die Nummer des Vater's in der Firma, das gleiche gilt auch für die Mutter auf Taste 2, Taste 3 wäre dann der Anschluß zu Hause, Taste 4 ist für den besten Freund o. Freundin, Taste 5 für den Hausarzt, Taste 6 die erste Besonderheit der Freisprechende Notruf mit Peilsender,Taste 7 die zweite Besonderheit der Stumme Notruf mit Peilsender über die Rufnummer im Handy u. ausgestattet mit Funksignal Sender. Sichtbar über Polizei und Display der Erwachsenen Handy's. Taste 8 ist die Speichertaste.

Wie funktioniert jetzt die ganze Sache ?!.

### siehe Zeichnung:

Die Nummern werden über die Speichertaste 8 mit Tippschaltung eingegeben.Wird die Tippschaltung 5 - 10 sek. nicht betätigt speichert sich die jeweilige Nummer und der Speicherplatz wandert eine Ziffer weiter, bis die komplette Rufnummer eingegeben ist. Fest gespeichert wird sie mit den dazugehörenden Nummerntasten. Die Nummerntasten 6 und 7 sind fest eingespeichert mit 110 dem Polizeiruf. Um ein versehentliches drücken des Notrufes zu verhindern muß die gewünschte Notruftaste mindestens 2 mal gedrückt werden. Zudem ist die Nummerntaste 6 farblich Erkentlich gemacht.Die Nummerntaste 7 dient als Stummer Notruf und wird bei 2 maliger Betätigung ausgelöst und soll in der dazugehörenden Polizeizentrale einen Alarm auslösen wobei die Polizei wiederum, weil das Moki mit einem Peilsender ausgestattet ist, via Sattelit das jeweilige Moki über die Rufnummer Orten und so z.B. einem Verbrechen schneller Vorbeugen können. Dann sollten genauso die Eltern über ihr Handydisplay ihre Kinder in einem ungefähren Umkreis Orten können. Das Moki soll dann über eine Internschaltung mit dem Hausanschluß Nummer 3 und umgedreht angeschlossen sein um es den Familien angenehm und kostengünstig zu gestalten. Außerdem soll es das Family - Pack als Vertrag's-und oder Kartentelefone geben und zu dem mit wechselnden Frontschalen.

Das Moki soll variabel sein und vom Moki auch zum ganz normalen Erwachsenenhandy Umrüstbar sein.

## Patentansprüche

1. den Namen Family - Pack u. Family - Plus und den dazugehörenden Zusammenstellungen.

2. den Namen Moki (Das moderne Kinderhandy) in seiner gesamten Zusammenstellung u. Funktion wie z.B. die Internschaltung im Handy u. Moki.

3. den Stummen - und Freisprechenden Notruf

4. die Funktion des Peilsenders, Funksignalsender und der Gebietskarte auf dem Handydisplay.

5. die Ausbaufähigkeit vom Moki zum Erwachsenen handy
